(19) Europäisches Patentamt
European Patent Office
Office européen des brevets

(11) **EP 4 517 171 A1**

(12) **EUROPEAN PATENT APPLICATION**
published in accordance with Art. 153(4) EPC

(43) Date of publication:
**05.03.2025 Bulletin 2025/10**

(21) Application number: **23831035.3**

(22) Date of filing: **09.06.2023**

(51) International Patent Classification (IPC):
**F23N 5/00** $^{(2006.01)}$    **G06Q 10/04** $^{(2023.01)}$

(52) Cooperative Patent Classification (CPC):
**F23N 5/00; G06Q 10/04**

(86) International application number:
**PCT/JP2023/021529**

(87) International publication number:
**WO 2024/004585 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.06.2022   JP 2022103400**

(71) Applicant: **JFE Steel Corporation
Tokyo 100-0011 (JP)**

(72) Inventors:
• **SUZUKI, Katsuya
Tokyo 100-0011 (JP)**
• **OGASAHARA, Tomoyoshi
Tokyo 100-0011 (JP)**
• **UNO, Masahiro
Tokyo 100-0011 (JP)**

(74) Representative: **Grünecker Patent- und
Rechtsanwälte
PartG mbB
Leopoldstraße 4
80802 München (DE)**

(54) **HEATING-FURNACE COMBUSTION-GAS USAGE ESTIMATION DEVICE, ENERGY IMPLEMENTATION OPTIMIZATION SYSTEM, ENERGY IMPLEMENTATION OPTIMIZATION DEVICE, DISPLAY TERMINAL DEVICE, HEATING-FURNACE COMBUSTION-GAS USAGE ESTIMATION METHOD, AND ENERGY IMPLEMENTATION OPTIMIZATION METHOD**

(57)     A furnace combustion gas usage prediction device includes: a slab information acquisition unit configured to acquire information on a slab; a temperature rise calculation unit configured to calculate an energy-converted temperature rise which has been subjected to energy conversion necessary for heating in the furnace based on slab information; a temperature rise editing unit configured to expand the energy-converted temperature rise of each slab, which has been calculated, into an energy-converted temperature rise for each calculation pitch that has been preliminarily determined, and edit the energy-converted temperature rise as an energy-converted temperature rise of an entire furnace for each calculation pitch; and a gas usage prediction unit configured to predict a gas usage in the furnace based on the energy-converted temperature rise of the entire furnace for each calculation pitch and a past actual gas usage.

FIG.2

## Description

Field

The present invention relates to a furnace combustion gas usage prediction device, an energy operation optimization system, an energy operation optimization device, a display terminal device, a furnace combustion gas usage prediction method, and an energy operation optimization method.

Background

In a steelworks, blast furnace gas (B gas) generated from a blast furnace, coke gas (C gas) generated from a coke oven, and converter gas (LD gas) generated from a converter, or mixed gas (M gas) of these gases and gas purchased from a gas company are used in a factory and power generation facilities. In the case, if operation is performed such that gas exceeds the level of a gas holder for storing gas to be excessive, the excessive gas is diffused to the atmosphere. In contrast, when a gas demand amount exceeds a gas supply amount and gas is lacked, factory operation is influenced. Thus, the steelworks needs to appropriately operate gas in accordance with an amount of the demand and supply of the gas.

There is known techniques for optimizing operation by evaluating costs of energy utilities such as gas generated in a steelworks, gas used in each factory, purchased power, generated power, generated steam, and used steam (e.g., see Patent Literatures 1 and 2).

Patent Literature 1 discloses a technique of determining an energy operation optimization condition that minimizes cost based on an operation prediction value in, for example, a production plan and, when an error between a predicted and actual value of energy operation cost is larger than a predetermined value, issuing an alarm.

Patent Literature 2 discloses a technique of continuing prediction calculation on, for example, a predetermined calculation cycle (e.g., five minutes) including a future plan for optimization calculation of energy operation. In Patent Literature 2, in order to solve such problems that a calculation load increases and the prediction accuracy of a production plan deteriorates as time goes to the future, a determination section of energy utility is roughened for prediction calculation after a predetermined period.

In particular, in a furnace of a steelworks, a semifinished product called a slab is heated by mixed gas (M gas) from insertion of the semifinished product to extraction thereof. Deficiency and excess of the mixed gas prevents appropriate combustion, which may cause an influence on product quality. Thus, it is required to predict an amount of mixed gas to be used in the future and perform manufacturing at appropriate timing.

Citation List

Patent Literature

Patent Literature 1: WO 2015/174359
Patent Literature 2: JP 2021-163085 A

Summary

Technical Problem

Patent Literatures 1 and 2 do not specifically describe use of a future operation plan. In particular, it is necessary to consider, for example, operation of a gas holder for gas generated in a steelworks. Prediction with higher accuracy is required.

Furthermore, as described above, deficiency and excess of mixed gas prevent appropriate combustion in a furnace of the steelworks, which may influence product quality. Therefore, it is required to accurately predict an amount of mixed gas to be used in the future and perform manufacture at appropriate timing while considering optimization of energy operation in the steelworks.

Slabs with various heating conditions are, however, sequentially inserted into the furnace. A plurality of slabs is simultaneously and continuously heated in the furnace. The heated slabs are sequentially extracted. Therefore, it is not easy to predict a temporal change in a combustion gas usage. A planed value needs to be corrected based on actual result.

The present invention has been made in view of the above, and an object thereof is to provide a furnace combustion gas usage prediction device, an energy operation optimization system, an energy operation optimization device, a display terminal device, a furnace combustion gas usage prediction method, and an energy operation optimization method capable of accurately predicting a gas usage in a furnace.

Solution to Problem

To solve the above-described problem and achieve the object, a furnace combustion gas usage prediction device according to the present invention for an energy operation optimization system of a steelworks includes: a slab information acquisition unit configured to acquire information on a slab to be inserted into and extracted from a furnace within a predetermined future period from current time; a temperature rise calculation unit configured to calculate an energy-converted temperature rise which has been subjected to energy conversion necessary for heating in the furnace for each slab based on slab information that has been acquired; a temperature rise editing unit configured to expand the energy-converted temperature rise of each slab, which has been calculated, into an energy-converted temperature rise for each calculation pitch that has been preliminarily determined based on time of insertion of each slab into the furnace and time of extraction of each slab from the furnace, and edit the energy-converted temperature rise as an energy-converted temperature rise of an entire furnace for each calculation pitch; and a gas usage prediction unit configured to predict a gas usage in the furnace based on the energy-converted temperature rise of the entire furnace for each calculation pitch and a past actual gas usage.

Moreover, in the above-described furnace combustion gas usage prediction device according to the present invention, the temperature rise calculation unit is configured to correct an insertion temperature in consideration of an attribute of the slab and usage of a temperature retention device at a time of conveyance until insertion into the furnace and an extraction temperature based on a target temperature up to which the slab is to be heated based on insertion temperatures and extraction temperatures of a predetermined number of slabs before and after the slab with reference to the slab information, and calculate an energy-converted temperature rise of each slab based on the insertion temperature and the extraction temperature after correction.

Moreover, in the above-described furnace combustion gas usage prediction device according to the present invention, in relation to the insertion temperature in the temperature rise calculation unit, the slab information is referred to, when a furnace insertion time is in past, an actual value is used as the insertion temperature, and when the furnace insertion time is in future, an attribute of the slab is referred to, when the slab is a hot slab, an insertion temperature in consideration of a temperature retention time and a conveyance time is calculated in accordance with whether or not the temperature retention device is used, and when the slab is a cold slab, the insertion temperature is set to a predetermined value.

Moreover, in the above-described furnace combustion gas usage prediction device according to the present invention, when expanding the energy-converted temperature rise of each slab, which has been calculated, into an energy-converted temperature rise for each calculation pitch, the temperature rise editing unit is configured to consider a predetermined time allocation pattern, and consider deviations of the insertion time and the extraction time from the calculation pitch.

Moreover, in the above-described furnace combustion gas usage prediction device according to the present invention, the gas usage prediction unit is configured to predict a gas usage that has been adjusted for actual values by using a trained model trained so as to output a gas usage in consideration of energy necessary for retaining temperature in the furnace using, as input, an energy-converted temperature rise of the entire furnace for each calculation pitch edited by the temperature rise editing unit.

To solve the above-described problem and achieve the object, an energy operation optimization system according to the present invention includes: the above-described furnace combustion gas usage prediction device; and an energy operation optimization device in the steelworks, wherein the energy operation optimization device is configured to acquire a gas usage of a furnace, which has been predicted by the furnace combustion gas usage prediction device, and optimize an energy operation condition of the steelworks.

To solve the above-described problem and achieve the object, an energy operation optimization device of a steelworks according to the present invention includes: a slab information acquisition unit configured to acquire information on a slab to be inserted into and extracted from a furnace within a predetermined future period from current time; a temperature rise calculation unit configured to calculate an energy-converted temperature rise which has been subjected to energy conversion necessary for heating in the furnace for each slab based on slab information that has been acquired; a temperature rise editing unit configured to expand the energy-converted temperature rise of each slab, which has been calculated, into an energy-converted temperature rise for each calculation pitch that has been preliminarily determined based on time of insertion of each slab into the furnace and time of extraction of each slab from the furnace, and edit the energy-converted temperature rise as an energy-converted temperature rise of an entire furnace for each calculation pitch; a gas usage prediction unit configured to predict a gas usage in the furnace based on the energy-converted temperature rise of the entire furnace for each calculation pitch and a past actual gas usage; and an energy operation optimization unit configured to optimize an energy operation condition of the steelworks based on the gas usage that has been predicted.

To solve the above-described problem and achieve the object, a display terminal device according to the present invention acquires various pieces of information from a furnace combustion gas usage prediction device configured to predict a future gas usage of a furnace and an energy operation optimization device configured to optimize an energy operation condition of a steelworks based on the future gas usage, displays the various pieces of information and includes: an information acquisition unit configured to acquire information including at least a gas usage predicted based on an energy-converted temperature rise of an entire furnace and a past actual gas usage and a mixing amount of by-product gas based on the gas usage that has been predicted, the energy-converted temperature rise of the entire furnace being calculated for each calculation pitch that has been preliminarily determined and edited as the energy-converted temperature rise of the entire furnace for each calculation pitch; and a display unit configured to display information acquired by the information acquisition unit.

To solve the above-described problem and achieve the object, a furnace combustion gas usage prediction method according to the present invention is executed by a furnace combustion gas usage prediction device constructed by a computer for an energy operation optimization system of a steelworks, and includes: a slab information acquisition step of acquiring, by a slab information acquisition unit of the computer, information on a slab to be inserted into and extracted from a furnace within a predetermined future period from current time; a temperature rise calculation step of calculating, by a temperature rise calculation unit of the computer, an energy-converted temperature rise which has been subjected to energy conversion necessary for heating in the furnace for each slab based on slab information that has been acquired; a temperature rise editing step of expanding, by a temperature rise editing unit of the computer, the energy-converted temperature rise of each slab, which has been calculated, into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch; and a gas usage prediction step of predicting, by a gas usage prediction unit of the computer, a gas usage in the furnace based on the energy-converted temperature rise of the entire furnace for each calculation pitch and a past actual gas usage.

To solve the above-described problem and achieve the object, an energy operation optimization method is executed by an energy operation optimization device of a steelworks, the energy operation optimization device being constructed by a computer, and includes: a slab information acquisition step of acquiring, by a slab information acquisition unit of the computer, information on a slab to be inserted into and extracted from a furnace within a predetermined future period from current time; a temperature rise calculation step of calculating, by a temperature rise calculation unit of the computer, an energy-converted temperature rise which has been subjected to energy conversion necessary for heating in the furnace for each slab based on slab information that has been acquired; a temperature rise editing step of expanding, by a temperature rise editing unit of the computer, the energy-converted temperature rise of each slab, which has been calculated, into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch; a gas usage prediction step of predicting, by a gas usage prediction unit of the computer, a gas usage in the furnace based on the energy-converted temperature rise of the entire furnace for each calculation pitch and a past actual gas usage; and an energy operation optimization step of optimizing, by an energy operation optimization unit of the computer, an energy operation condition of the steelworks based on the gas usage that has been predicted.

Advantageous Effects of Invention

According to the furnace combustion gas usage prediction device and the furnace combustion gas usage prediction method according to the present invention, a future gas usage, which has been adjusted for actual values, can be accurately predicted. Furthermore, according to the energy operation optimization system, the energy operation optimization device, and the energy operation optimization method of the present invention, the energy operation condition of the steelworks can be optimized based on the accurately predicted gas usage. Furthermore, according to the display terminal device of the present invention, information on, for example, a future gas usage and a mixing amount of by-product gas based on the future gas usage can be guided.

Brief Description of Drawings

> FIG. 1 illustrates a schematic configuration of an energy operation optimization system according to an embodiment of the present invention.

FIG. 2 is a block diagram illustrating a specific function of a furnace combustion gas usage prediction device according to the embodiment of the present invention.

FIG. 3 is a block diagram illustrating a specific function of the energy operation optimization device according to the embodiment of the present invention.

FIG. 4 is a flowchart illustrating a flow of a furnace combustion gas usage prediction method according to the embodiment of the present invention.

FIG. 5 is a flowchart illustrating details of a temperature rise calculation step in the furnace combustion gas usage prediction method according to the embodiment of the present invention.

FIG. 6 is a flowchart illustrating details of insertion temperature simulation in the temperature rise calculation step in the furnace combustion gas usage prediction method according to the embodiment of the present invention.

FIG. 7 illustrates the relation between a plan of insertion of slabs into the furnace and a total value of energy-converted temperature rises of the slabs for each calculation pitch ($\Delta T$) in the furnace combustion gas usage prediction method according to the embodiment of the present invention.

FIG. 8 illustrates an example of the furnace combustion gas usage prediction method according to the embodiment of the present invention, and is a graph obtained by comparing a root mean square error (RMSE) in a case where only an actual result average is used with that in a case where rolling information is used in addition to the actual result average.

Description of Embodiments

A furnace combustion gas usage prediction device, an energy operation optimization system, an energy operation optimization device, a display terminal device, a furnace combustion gas usage prediction method, and an energy operation optimization method according to an embodiment of the present invention will be described with reference to the drawings. Note that components in the following embodiment include those that can be easily replaced by those skilled in the art or those that are substantially the same.

(Energy Operation Optimization System)

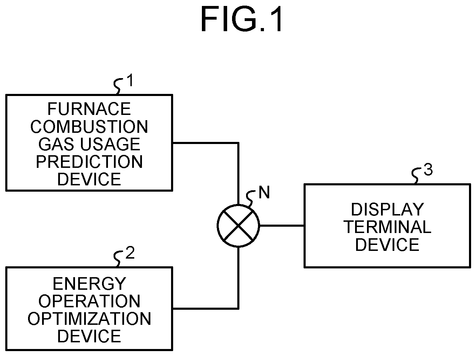

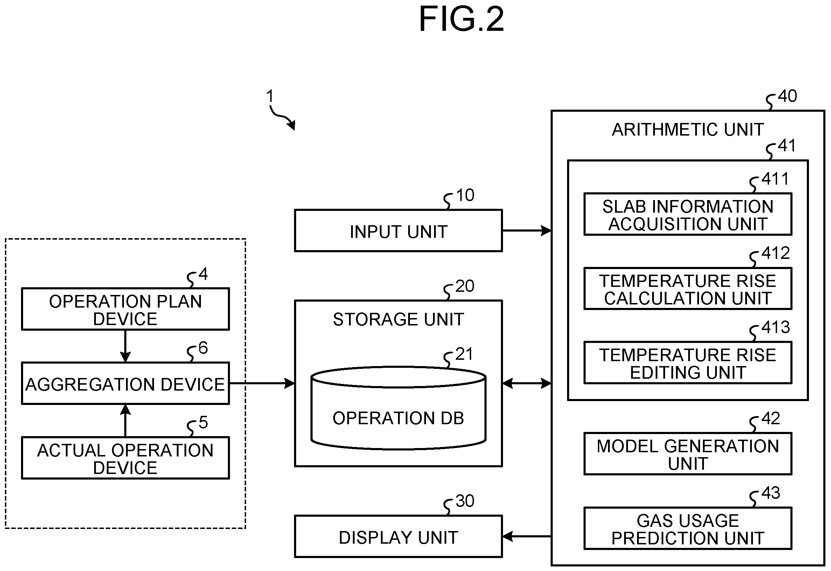

An energy operation optimization system according to the embodiment will be described with reference to FIGS. 1 and 2. The energy operation optimization system is used in, for example, a steelworks. As illustrated in FIG. 1, the energy operation optimization system includes a furnace combustion gas usage prediction device 1, an energy operation optimization device 2, and a display terminal device 3.

The furnace combustion gas usage prediction device 1, the energy operation optimization device 2, and the display terminal device 3 can communicate with each other via a network N such as an Internet line network. The display terminal device 3 of the energy operation optimization system is disposed in, for example, the steelworks.

(Furnace Combustion Gas Usage Prediction Device)

The furnace combustion gas usage prediction device 1 is implemented by, for example, a general-purpose computer, such as a workstation and a personal computer, or a server disposed on a cloud. As illustrated in FIG. 2, the furnace combustion gas usage prediction device 1 includes an input unit 10, a storage unit 20, a display unit 30, and an arithmetic unit 40.

The input unit 10 is an input to the arithmetic unit 40. The input unit 10 is implemented by an input device such as a keyboard, a mouse pointer, and a numeric keypad.

The storage unit 20 includes a recording medium such as an erasable programmable ROM (EPROM), a hard disk drive (HDD), and a removable medium. Examples of the removable medium include a universal serial bus (USB) memory and a disk recording medium such as a compact disc (CD), a digital versatile disc (DVD), and a Blu-ray (registered trademark) disc (BD). The storage unit 20 can store, for example, an operating system (OS), various programs, various tables, and various databases. Furthermore, the storage unit 20 stores an operation database (DB) 21.

The operation DB 21 stores information on a slab (hereinafter, referred to as "slab information") to be inserted into and extracted from a furnace within a predetermined future period from the current time. As illustrated in FIG. 2, an operation plan device 4, an actual operation device 5, and an aggregation device 6 are provided outside the furnace combustion gas usage prediction device 1, for example. Then, operation plan data accumulated in the operation plan device 4 and actual operation data accumulated in the actual operation device 5 are aggregated by the aggregation device 6, and stored in the operation DB 21 as slab information.

The display unit 30 is implemented by, for example, a liquid crystal display (LCD), an organic EL display (OLED), and a touch panel display. The display unit 30 displays, for example, an arithmetic result from the arithmetic unit 40 and a tuning screen at the time of the arithmetic operation.

The arithmetic unit 40 includes a processor and a memory (main storage unit). The processor includes, for example, a central processing unit (CPU). The memory (main storage unit) includes a random access memory (RAM) and a read only memory (ROM).

The arithmetic unit 40 loads and executes a program in a work area of the main storage unit, and implements a function matching a predetermined object by controlling each component and the like through the execution of the program. The arithmetic unit 40 functions as a preprocessing unit 41, a model generation unit 42, and a gas usage prediction unit 43 through the execution of the program described above. Note that, although FIG. 2 illustrates an example in which one computer (arithmetic unit) implements the functions of the units, a method of specifically implementing the functions of the units is not particularly limited. For example, a plurality of computers may implement the functions of the units.

Specifically, the preprocessing unit 41 functions as a slab information acquisition unit 411, a temperature rise calculation unit 412, and a temperature rise editing unit 413.

The slab information acquisition unit 411 acquires, from the operation DB 21, slab information on a slab (hereinafter, referred to as "target slab") to be inserted into a furnace in a target time zone. Note that details of processing (slab information acquisition step) performed by the slab information acquisition unit 411 will be described later.

The temperature rise calculation unit 412 calculates an energy-converted temperature rise obtained by energy conversion, which is necessary for heating in a furnace, for each target slab based on each piece of slab information acquired by the slab information acquisition unit 411.

The temperature rise calculation unit 412 corrects an insertion temperature and an extraction temperature with reference to the slab information. The insertion temperature has been determined in consideration of the attributes of a slab and the use of a temperature retention device (e.g., heat retention pit) at the time of conveyance until insertion into the furnace. The extraction temperature has been determined based on a target temperature up to which the slab is to be heated. The temperature rise calculation unit 412 corrects the insertion temperature and the extraction temperature described above based on insertion temperatures and extraction temperature of a predetermined number of slabs before and after the target slab. Then, the temperature rise calculation unit 412 calculates an energy-converted temperature rise of each slab based on the insertion temperature and the extraction temperature after the correction. Note that details of processing (temperature rise calculation step) performed by the temperature rise calculation unit 412 will be described later.

The temperature rise editing unit 413 expands the energy-converted temperature rise of each slab calculated by the temperature rise calculation unit 412 into an energy-converted temperature rise for each predetermined calculation pitch based on the time of insertion of each slab into the furnace and the time of extraction of each slab from the furnace. Then, the temperature rise editing unit 413 edits the energy-converted temperature rise of each slab as an energy-converted temperature rise of the entire furnace for each calculation pitch.

When expanding the calculated energy-converted temperature rise of each slab into an energy-converted temperature rise for each calculation pitch, the temperature rise editing unit 413 considers a predetermined time allocation pattern, and considers deviations of the insertion time and the extraction time from the calculation pitch. Note that details of processing (temperature rise editing step) performed by the temperature rise editing unit 413 will be described later.

The model generation unit 42 generates a trained model by using machine learning. The model generation unit 42 generates the trained model by performing learning so as to output a gas usage in consideration of energy necessary for maintaining temperature in the furnace by using, as input, the energy-converted temperature rise of the entire furnace for each calculation pitch edited by the temperature rise editing unit 413. Methods such as linear regression, linear regression with regularization (e.g., Lasso regression), nonlinear regression (e.g., neural network and support vector machine), and a regression tree (e.g., decision tree and random forest) can be used for machine learning.

The gas usage prediction unit 43 predicts a gas usage in the furnace based on the energy-converted temperature rise of the entire furnace for each calculation pitch, which has been edited by the temperature rise editing unit 413, and a past actual gas usage. Furthermore, the gas usage prediction unit 43 may predict a gas usage which has been adjusted for actual values by using the trained model preliminarily generated by the model generation unit 42. Note that details of processing (gas usage prediction step) performed by the gas usage prediction unit 43 will be described later.

(Energy Operation Optimization Device)

The energy operation optimization device 2 is implemented by, for example, a general-purpose computer, such as a workstation and a personal computer, or a server disposed on a cloud. The energy operation optimization device 2 acquires a gas usage in the furnace, which has been predicted by the furnace combustion gas usage prediction device 1, and optimizes an energy operation condition of a steelworks. Note that methods described in, for example, Japanese Patent Application No. 2020-062922 can be used for optimizing an energy operation condition of a steelworks.

Although the furnace combustion gas usage prediction device 1 and the energy operation optimization device 2 have been described here as separate devices in FIGS. 1 and 2, the function of the furnace combustion gas usage prediction device may be incorporated in the energy operation optimization device, for example.

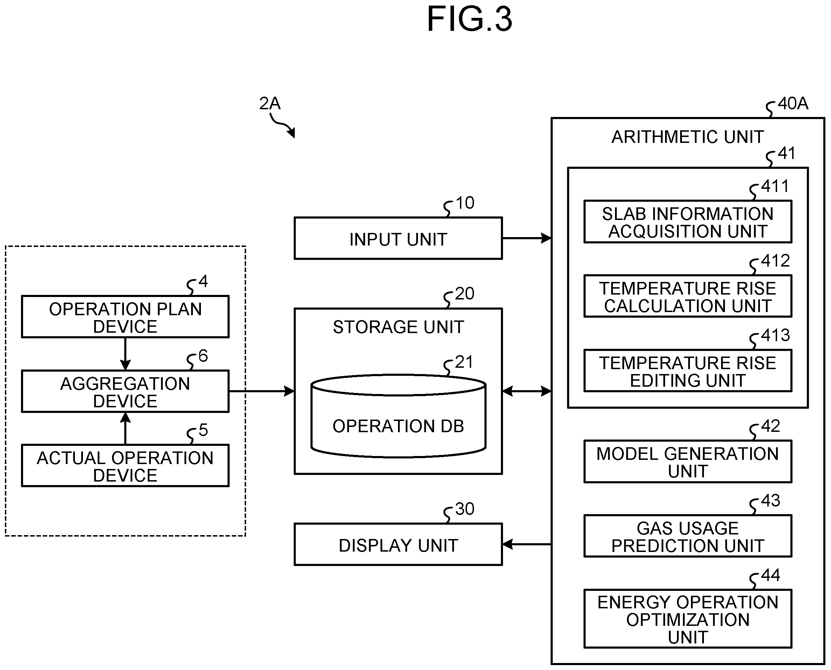

FIG. 3 illustrates functional blocks of an energy operation optimization device 2A in which the function of the furnace combustion gas usage prediction device is incorporated. The energy operation optimization device 2A includes the input unit 10, the storage unit 20, the display unit 30, and an arithmetic unit 40A. The arithmetic unit 40A functions as an energy operation optimization unit 44 in addition to the preprocessing unit 41, the model generation unit 42, and the gas usage prediction unit 43. Note that, components other than the energy operation optimization unit 44 among the components of the energy operation optimization device 2A are similar to those of the furnace combustion gas usage prediction device 1, so that description thereof is omitted.

The energy operation optimization unit 44 optimizes an energy operation condition of a steelworks based on the gas usage predicted by the gas usage prediction unit 43. Methods disclosed in, for example, Japanese Patent Application No. 2020-062922 can be used for optimizing an energy operation condition of a steelworks.

(Display Terminal Device)

The display terminal device 3 acquires various pieces of information from the furnace combustion gas usage prediction device 1 and the energy operation optimization devices 2 and 2A, and displays the various pieces of information. The furnace combustion gas usage prediction device 1 predicts a future gas usage in the furnace. The energy operation optimization devices 2 and 2A optimize an energy operation condition of a steelworks. The display terminal device 3 is implemented by, for example, a liquid crystal display (LCD), an organic EL display (OLED), and a touch panel display.

The display terminal device 3 has, for example, a function of an information acquisition unit and a function of a display unit. The information acquisition unit acquires, from the furnace combustion gas usage prediction device 1, information including at least the gas usage predicted based on the energy-converted temperature rise of the entire furnace and the past actual gas usage. The "energy-converted temperature rise of the entire furnace" is calculated for each predetermined calculation pitch, and edited as an energy-converted temperature rise of the entire furnace. Furthermore, the information acquisition unit may acquire, from the furnace combustion gas usage prediction device **1,** information on an energy-converted temperature rise which has been subjected to energy conversion for each slab necessary for heating before being edited as the energy-converted temperature rise of the entire furnace.

Furthermore, the display terminal device 3 acquires, from the energy operation optimization devices 2 and 2A, information including at least a by-product gas mixing amount based on the predicted gas usage. Then, the display unit displays the above-described information acquired by the information acquisition unit.

(Furnace Combustion Gas Usage Prediction Method)

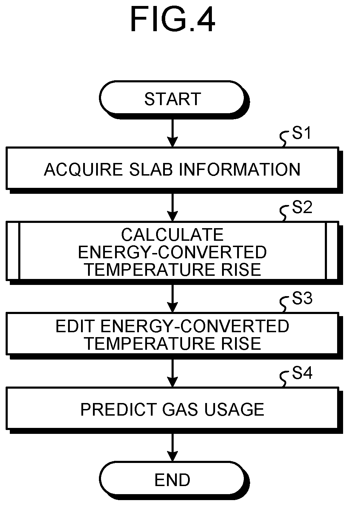

The furnace combustion gas usage prediction method according to the embodiment will be described with reference to FIGS. 4 to 7**.** Here, in order to avoid a rapid change in set temperature in the furnace, the furnace may be divided basically into a dedicated furnace for hot slab and a dedicated furnace for cold slab. Only hot slabs/cold slabs may be inserted into the dedicated furnaces. Furthermore, a hot slab and a cold slab may be inserted into the same furnace. In such a case, a dummy slab is inserted between the hot slab and the cold slab in order to avoid a rapid change in set temperature in the furnace. Furthermore, when a plurality of furnaces operate, a furnace combustion gas usage is predicted and calculated for each of the furnaces, and can be applied to any of the dedicated furnace for hot slab, a dedicated furnace for cold slab, and a furnace in which hot slab/cold slab are mixed.

As illustrated in FIG. 4, the furnace combustion gas usage prediction method includes the slab information acquisition step (Step S1), the temperature rise calculation step (Step S2), the temperature rise editing step (Step S3), and the gas usage prediction step (Step S4). Note that, in the furnace combustion gas usage prediction method, a model generation step may be preliminarily performed before the gas usage prediction step is performed, as necessary.

<Slab Information Acquisition Step>

In the slab information acquisition step, the slab information acquisition unit 411 acquires slab information from the operation DB 21 (Step S1). Examples of the slab information include the following information.

(1) Extraction scheduled temperature (extraction target temperature)
(2) Slab weight
(3) Slab dimensions (thickness, width, and length)
(4) Insertion scheduled time and extraction scheduled time
(5) Actual gas usage: gas (mixed gas) usage record from present to before predetermined time (e.g., before one hour) in furnace
(6) Type of whether slab is hot slab or cold slab

(7) In a case where slab is hot slab, slab temperature in continuous casting, whether or not slab passes through heat retention pit (temperature retention device), and slab conveyance time (lead time) and slab conveyance route depending on whether or not slab passes through heat retention pit

(8) Parameters necessary for heating energy calculation (e.g., steel type, specific heat, and heat transfer parameters (e.g., heat conductivity and heat transfer coefficient))

<Temperature Rise Calculation Step>

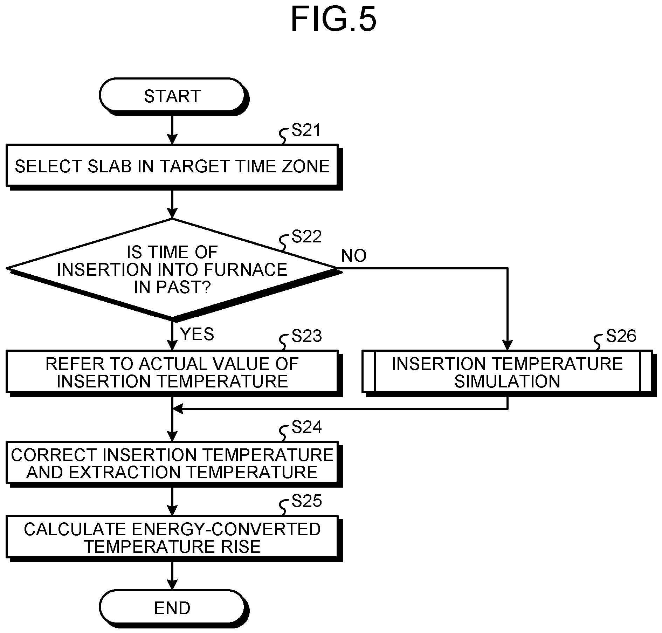

In the temperature rise calculation step, the temperature rise calculation unit 412 calculates an energy-converted temperature rise based on the slab information and the like (Step S2). In the temperature rise calculation step, the energy-converted temperature rise is calculated specifically by a procedure in FIG. 5.

First, the temperature rise calculation unit 412 selects a target slab with reference to the slab information (Step S21). Subsequently, the temperature rise calculation unit 412 determines whether or not the time of insertion of the target slab into the furnace is in the past (Step S22).

When determining that the time of insertion of the target slab into the furnace is in the past in Step S22 (Yes in Step S22), the temperature rise calculation unit 412 refers to an actual value of an insertion temperature of the target slab in the slab information (Step S23).

Subsequently, the temperature rise calculation unit 412 corrects the insertion temperature and the extraction temperature (Step S24). The temperature rise calculation unit 412 acquires insertion temperatures and extraction temperatures of all target slabs extracted from the furnace by performing Steps S23 and S24 above. All the slabs include a slab to be inserted into and extracted from the furnace within a predetermined future period from the current time and a slab that is inserted into the furnace at present. In relation to the insertion temperature, when the furnace insertion time is in the past, an actual value (see Step S23) is used, and, when the furnace insertion time is at present or in the future, a calculated value (see Step S26) in insertion temperature simulation is used. Furthermore, the extraction temperature is used by acquiring a planned value from the slab information. Note that it has been described that, "when the furnace insertion time is in the past, an actual value is used". For example, however, when the actual value cannot be acquired, a calculated value preliminarily calculated by the insertion temperature simulation may be used as the insertion temperature.

In Step S24, the temperature rise calculation unit 412 refers to the slab information. For example, as illustrated in (1) below, the temperature rise calculation unit 412 corrects the temperature of insertion of the target slab into the minimum value of temperatures of insertion of a predetermined number of slabs before and after the target slab. Furthermore, the temperature rise calculation unit 412 refers to the slab information. For example, as illustrated in (2) below, the temperature rise calculation unit 412 corrects the temperature of extraction of the target slab into the maximum value of temperatures of extraction (extraction scheduled temperature) of the predetermined number of slabs before and after the target slab.

(1) Corrected insertion temperature value = Min (temperature of insertion of predetermined number of slabs before and after target slab)
(2) Corrected extraction temperature value = Max (temperature of extraction of predetermined number of slabs before and after target slab)

Slabs are arranged and sequentially inserted into the furnace. Individual slabs may have different insertion temperatures and extraction scheduled temperatures. Furthermore, the slabs arranged in a preheating zone, a heating zone, and a soaking zone are simultaneously heated in the furnace. Therefore, the insertion temperature is corrected into the minimum value of the temperatures of insertion of the slabs around the target slab (see (1) above). The extraction temperature is corrected into the maximum value of the temperatures of extraction of the slabs around the target slab (see (2) above).

Subsequently, the temperature rise calculation unit 412 calculates an energy-converted temperature rise by using the corrected insertion temperature and extraction temperature (Step S25). In Step S25, an in-furnace time is calculated from the time of insertion and the time of extraction of the target slab after the correction. Then, an energy-converted temperature rise A ($\Delta T$) of each target slab is calculated by multiplying a temperature rise for each predetermined calculation pitch ($\Delta T$) during the in-furnace time by a slab weight and converting the multiplied temperature rise into a temperature rise corresponding to heating energy as indicated in Expression (1) below. In Expression (1) below, b and c are coefficients.

$$\begin{aligned}
\text{Energy-converted temperature rise } A(\Delta T) \\
= \{b \times (\text{corrected extraction temperature value} \\
- \text{corrected insertion temperature value}) \\
\times \text{slab weight} + c \times \text{slab thickness}\}/\text{in-furnace time} \\
\times \text{calculation pitch } (\Delta T)
\end{aligned} \qquad \cdots (1)$$

Note that, here, the energy-converted temperature rise is equally divided and allocated to calculation pitches ($\Delta T$). In contrast, when the time of insertion into and the time of extraction from the furnace deviate from a calculation pitch ($\Delta T$), an adjustment is made with ($\Delta T1/\Delta T$) by using the in-furnace time ($\Delta T1$). Furthermore, slabs with different thicknesses require different amount of heating energy, even if they have the same slab weight. Therefore, as indicated in Expression (1) above, a correction term based on a slab thickness is preferably introduced. Furthermore, weighted allocation may be adopted in consideration of a change in specific heat accompanying a rise in temperature.

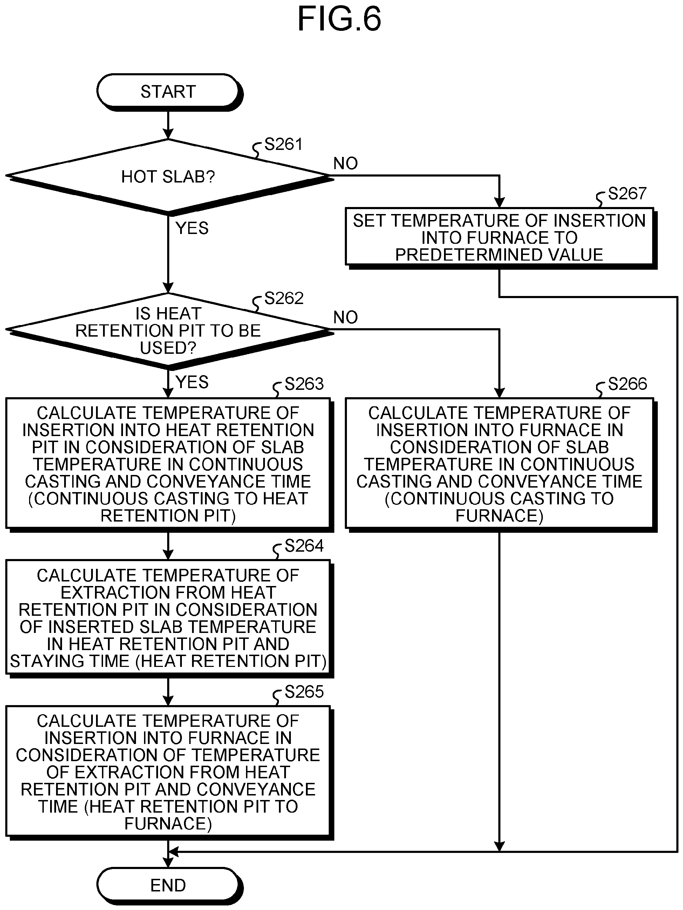

Here, when determining that the time of insertion of the target slab into the furnace is not in the past (i.e., at present or in future) in Step S22 (No in Step S22), the temperature rise calculation unit 412 performs insertion temperature simulation on the target slab (Step S26). Then, the processing proceeds to Step S24. Specifically, the insertion temperature simulation is performed by the procedure in FIG. 6.

First, the temperature rise calculation unit 412 determines whether or not the target slab is a hot slab (hot slab or cold slab) (Step S261). When determining that the target slab is a hot slab in Step S261 (Yes in Step S261), the temperature rise calculation unit 412 determines whether or not to use a heat retention pit, that is, whether or not to insert the target slab into the heat retention pit (Step S262).

When determining to use the heat retention pit in Step S262 (Yes in Step S262), the temperature rise calculation unit 412 calculates a temperature of insertion into the heat retention pit in consideration of a slab temperature at the time of extraction from continuous casting and a slab conveyance time from the continuous casting to insertion into the heat retention pit (Step S263). In Step S263, the temperature of insertion into the heat retention pit can be calculated as follows as a centralized heat capacity model by using, for example, a theory of heat conduction/heat transfer.

Temperature of insertion into heat retention pit = (initial temperature - steady temperature) $\times$ EXP (-Fourier number $\times$ Biot number) + steady temperature $\qquad$ (1)

where

Fourier number = thermal diffusivity $\times$ conveyance --> time/(slab thickness)$^{2d}$ $\qquad$ (2)

Biot number = heat transfer coefficient $\times$ slab thickness/thermal conductivity $\qquad$ (3)

Thermal diffusivity = thermal conductivity/density/specific heat $\qquad$ (4)

Conveyance time = conveyance time from continuous casting to insertion into heat retention pit $\qquad$ (5)

Initial temperature = slab temperature in continuous casting $\qquad$ (6)

For example, as described below, the initial temperature may be a value determined by inversely calculating Expression (1) above from past result, or may be an average value, a mode, or the like with reference to frequency distribution.

Initial temperature = (temperature of insertion into heat retention pit - steady temperature)/EXP (- Fourier number $\times$ Biot number) + steady temperature

Furthermore, when the coefficients in (2) to (4) above are unknown, (1) above may be replaced with a learning model using the past result. In this case, for example, a learning model g as described below is preliminarily generated to calculate the insertion temperature.

Temperature of insertion into heat retention pit = g (conveyance time, slab thickness, and initial temperature)

Subsequently, the temperature rise calculation unit 412 calculates the temperature of extraction from the heat retention pit in consideration of the temperature of a slab to be inserted into the heat retention pit and slab staying time in the heat retention pit (Step S264). In Step S264, the temperature of extraction from the heat retention pit can be calculated by a method (see (1) above) similar to the method by which the temperature of insertion into the heat retention pit is determined. Note, however, that, in Step S264, "Conveyance time = heat retention time in heat retention pit" in (5) above and "Initial temperature = temperature of slab inserted into heat retention pit" in (6) above are set.

Subsequently, the temperature rise calculation unit 412 calculates the temperature of insertion into the furnace in consideration of the temperature of extraction from the heat retention pit and a conveyance time from the heat retention pit to insertion into the furnace (Step S265). In Step S265, the temperature of insertion into the furnace can be calculated by a method (see (1) above) similar to the method by which the temperature of insertion into the heat retention pit is determined. Note, however, that, in Step S265, "Conveyance time = conveyance time from extraction from heat retention pit to insertion into furnace" in (5) above and "Initial temperature = temperature of slab extracted from heat retention pit" in (6) above are set.

When determining not to use the heat retention pit in Step S262 (No in Step S262), the temperature rise calculation unit 412 calculates a temperature of insertion into the furnace in consideration of a slab temperature at the time of extraction from continuous casting and a slab conveyance time from the continuous casting to the furnace (Step S266). In Step S266, the temperature of insertion into the furnace can be calculated by a method (see (1) above) similar to the method by which the temperature of insertion into the heat retention pit is determined. Note, however, that, in Step S266, "Steady temperature = ambient temperature of space with slab" in (1) above, "Conveyance time = conveyance time from continuous casting to insertion into furnace" (5) above, and "Initial temperature = slab temperature in continuous casting" in (6) above are set.

When determining that the target slab is not a hot slab (but cold slab) in Step S261 (No in Step S261), the temperature rise calculation unit 412 sets the temperature of insertion into the furnace to a predetermined value (Step S267). As described above, in the insertion temperature simulation, an appropriate insertion temperature is calculated in accordance with whether or not the target slab passes through the heat retention pit from the continuous casting.

<Energy-converted temperature rise Editing Step>

The description returns to Step S3 in FIG. 4. In the energy-converted temperature rise editing step, the temperature rise editing unit 413 expands the energy-converted temperature rise of each target slab calculated in Step S2 into an energy-converted temperature rise for each calculation pitch ($\Delta T$). Then, the temperature rise editing unit 413 edits the energy-converted temperature rise of the entire furnace for each calculation pitch ($\Delta T$) (Step S3).

Here, in Step S2, the energy-converted temperature rise for each calculation pitch ($\Delta T$) between the insertion time and the extraction time for each target slab is calculated. Therefore, as illustrated in Expression (2) below, the temperature rise editing unit 413 arranges energy-converted temperature rises for each time, and adds an energy-converted temperature rise of each target slab for each calculation pitch ($\Delta T$). This causes a necessary energy-converted temperature rise in the entire furnace (hereinafter, referred to as "in-furnace total slab energy-converted temperature rise") to be edited and calculated for a predetermined future period from the current time.

$$\text{in-furnace total slab energy-converted temperature rise } (k \times \Delta T) \\ = \sum \text{energy-converted temperature rise } A(k \times \Delta T) \qquad \cdots (2)$$

Here, k in Expression (2) above is an integer of k = 1, 2,.... In Expression (2) above, a start time desired to be predicted is set to k = 1. A future period desired to be predicted is preliminarily determined. Addition is sequentially performed. An end time is determined. Calculation is then performed.

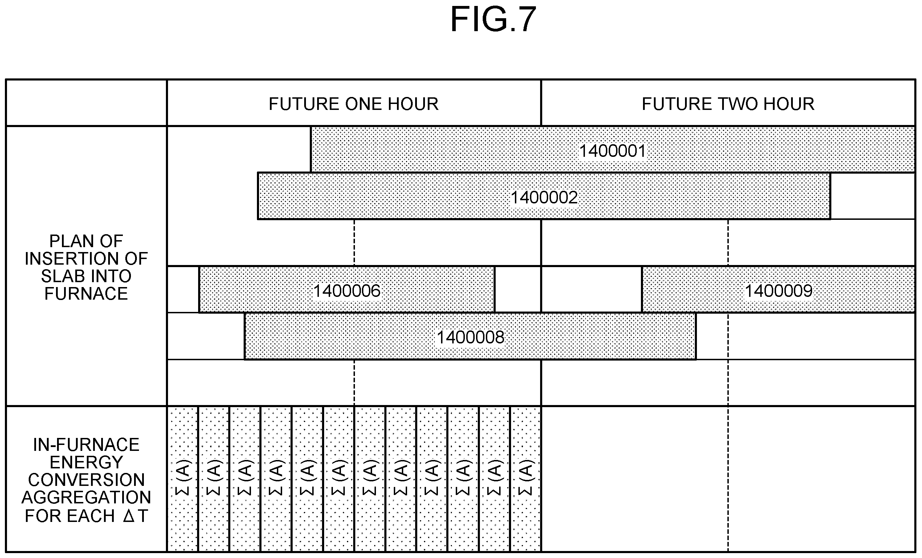

FIG. 7 illustrates the relation between a plan of insertion of slabs into the furnace and a total value of energy-converted temperature rises of the slabs for each calculation pitch ($\Delta T$), which has been calculated by Expression (2) above. Bars in the "plan of insertion of slab into furnace" in the figure indicate the slabs, and numbers in the bars indicate slab numbers. Furthermore, in the figure, future one hour is set as a future period, and the calculation pitch ($\Delta T$) is set to five minutes.

<Gas Usage Prediction Step>

In the gas usage prediction step, the gas usage prediction unit 43 predicts a future gas usage for each calculation pitch ($\Delta T$) by using the in-furnace total slab energy-converted temperature rise for each calculation pitch ($\Delta T$) and an actual gas usage before a predetermined time in the past (Step S4). Here, a gas usage of any of C gas, LD gas, and B gas generated in the steelworks or M gas obtained by mixing these gases may be predicted in the gas usage prediction step. Furthermore, a gas usage of city gas or other gases purchased from the outside may be predicted.

In the gas usage prediction step, the gas usage may be predicted by using the trained model preliminarily generated in the model generation step. The trained model can be generated by using methods of machine learning, such as linear regression, linear regression with regularization (e.g., Lasso regression), nonlinear regression (e.g., neural network and support vector machine), and a regression tree (e.g., decision tree and random forest). When, for example, linear regression is used, modeling can be performed as illustrated in Expression (3) below. In Expression (3) below, a and d are coefficients.

$$\text{Predicted gas usage } (k \times \Delta T)$$
$$= \text{in-furnace total slab energy-converted temperature rise } (k \times \Delta T) \qquad \cdots (3)$$
$$+ \text{a} \times \text{actual gas usage } \Delta T \text{ before predetermined time} + d$$

In Expression (3) above, the first term on the right side is a predicted gas usage necessary for heating a slab. The second term reflects the actual gas usage. Here, an actual value of a gas usage within $\Delta T$ time before a predetermined time (e.g., before one hour) of each insertion time of a target slab may be given to "actual gas usage $\Delta T$ before predetermined time" of the second term on the right side. Furthermore, an average from the present time to a predetermined time in the recent past may be given by $\Delta T$ time to "actual gas usage $\Delta T$ before predetermined time", or other actual value reflecting the current actual operation may be given to "actual gas usage $\Delta T$ before predetermined time".

In Expression (3) above, the third term on the right side is a constant term for considering energy necessary for other than heating the slab, for example, necessary for extracting heat from a furnace body and retaining temperature in the furnace. Note that, also in a machine learning model other than the linear regression, a unit input value (e.g., "1") may be given for learning when consideration is not made unless a constant term is explicitly given.

As described above, a prediction value of the gas usage, which has been adjusted for actual values, can be calculated for each calculation pitch ($\Delta T$) for predetermined future period from the current time. Data of the prediction value of the gas usage calculated in the gas usage prediction step is stored in, for example, the operation DB 21 as a planned gas usage of the furnace. Furthermore, the gas usage prediction step is performed for each predetermined calculation pitch ($\Delta T$), and data is updated each time.

The stored planned gas usage of the furnace can be used for, for example, energy operation optimization calculation. The planned gas usage can be reflected in a planned value of a gas consumption in a steelworks, in, for example, an energy operation condition optimization device described in Japanese Patent Application No. 2020-062922. For example, when mixed gas (M gas) is used as combustion gas in the furnace, a computer that performs optimization calculations acquires a planned gas usage value as the M gas consumption amount in the furnace, and uses this planned gas usage value as a part of the whole thereof. This planned gas usage value can be used for energy operation optimization calculation in the steelworks.

Note that a plurality of furnaces is provided, calculation can be performed by, for example, "Prediction value of M gas usage = f (planned energy-converted temperature rise of first furnace,..., planned energy-converted temperature rise of Nth furnace, and M gas actual value)".

According to the furnace combustion gas usage prediction device and the furnace combustion gas usage prediction method according to the above-described embodiment, a future gas usage, which has been adjusted for actual values, can be accurately predicted. Furthermore, according to the furnace combustion gas usage prediction device and the furnace combustion gas usage prediction method of the embodiment, for example, a future usage of M gas is predicted, and time-series transition (increase/decrease) is guided. This enables an operator in the steelworks to grasp an M gas required amount in the future and adjust mixing of M gas (by-product gas/city gas). This enables by-product gas to be efficiently used in the steelworks, which leads to reduction of purchase of fuel such as city gas.

Furthermore, according to the energy operation optimization system, the energy operation optimization device, and the energy operation optimization method of the embodiment, the energy operation condition of the steelworks can be optimized based on the accurately predicted gas usage. Furthermore, according to the energy operation optimization system, the energy operation optimization device, and the energy operation optimization method of the embodiment, the future gas usage is used for optimizing energy operation in the steelworks. This enables guidance by numerically calculating, for example, a mixing amount of by-product gas, which leads to labor saving of operator judgment. Note that examples of an item to be displayed at the time of guidance include a prediction value of a usage of M gas, a mixing amount of by-product gas (B gas amount, C gas amount, and LD gas amount), and a city gas amount.

Furthermore, according to the display terminal device of the embodiment, information on, for example, a future gas usage and a mixing amount of by-product gas based on the future gas usage can be guided.

(Example)

An example of the furnace combustion gas usage prediction method according to the present invention will be described with reference to FIG. 7. In the example, a trained model was created to verify accuracy by using a random forest, which is a type of a regression tree, based on past 7000 pieces of operation data in units of five minutes. A usage of mixed gas in a hot-rolling furnace was used as an objective variable of the trained model. An actual result average and rolling information were used as explanatory variables.

In verifying the accuracy of the trained model, past 3000 pieces of operation data, different from the operation data used in learning, in units of five minutes were used. Furthermore, an ideal situation in which a plan is 100% liable was assumed and rolling actual result was used for rolling information.

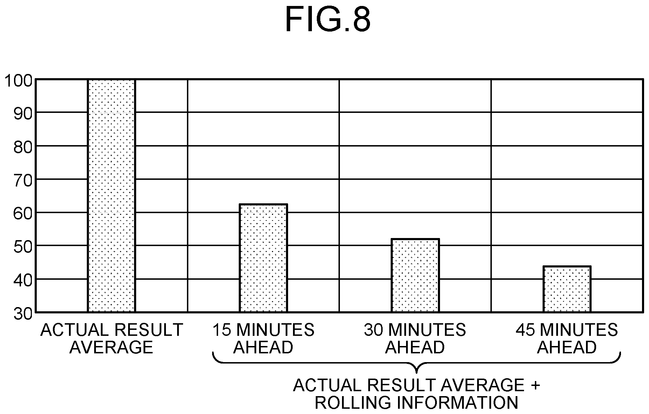

A figure illustrates a result of comparison between errors, which has been obtained by verifying the accuracy of the trained model. Errors used as accuracy indices were calculated by setting a root mean square error (RMSE) to "100" in a case where only an actual result average was used without using the rolling information. FIG. 8 indicates that an error in a case where the rolling information is used for learning in addition to the actual result average is smaller than errors in a case where only the actual result average is used for learning. Furthermore, it is found that 37% improvement is made in prediction of a usage of mixed gas of 15 minutes ahead, 48% in prediction of 30 minutes ahead, and approximately 56% in prediction of 45 minutes ahead. As described above, according to the furnace combustion gas usage prediction method of the present invention, a usage of mixed gas in the future can be accurately predicted.

The furnace combustion gas usage prediction device, the energy operation optimization system, the energy operation optimization device, the display terminal device, the furnace combustion gas usage prediction method, and the energy operation optimization method according to the present invention have been specifically described above with reference to the embodiment for carrying out the present invention and the example, the gist of the present invention is not limited to these descriptions, and should be widely interpreted based on the description of claims. Furthermore, it goes without saying that various changes, modifications, and the like based on these descriptions are also included in the gist of the present invention.

Note that the present technology can also have the following configurations.

(1) A furnace combustion gas usage prediction device for an energy operation optimization system of a steelworks, including:

a slab information acquisition unit configured to acquire information on a slab to be inserted into and extracted from a furnace within a predetermined future period from current time;
a temperature rise calculation unit configured to calculate an energy-converted temperature rise which has been subjected to energy conversion necessary for heating in the furnace for each slab based on slab information that has been acquired;
a temperature rise editing unit configured to

expand the energy-converted temperature rise of each slab, which has been calculated, into an energy-converted temperature rise for each calculation pitch that has been preliminarily determined based on time of insertion of each slab into the furnace and time of extraction of each slab from the furnace, and
edit the energy-converted temperature rise as an energy-converted temperature rise of an entire furnace for each calculation pitch; and

a gas usage prediction unit configured to predict a gas usage in the furnace based on the energy-converted temperature rise of the entire furnace for each calculation pitch and a past actual gas usage.

(2) The furnace combustion gas usage prediction device according to (1), wherein the temperature rise calculation unit is configured to

correct an insertion temperature in consideration of an attribute of the slab and usage of a temperature retention device at a time of conveyance until insertion into the furnace and an extraction temperature based on a target temperature up to which the slab is to be heated based on insertion temperatures and extraction temperatures of a predetermined number of slabs before and after the slab with reference to the slab information, and
calculate an energy-converted temperature rise of each slab based on the insertion temperature and the extraction temperature after correction.

(3) The furnace combustion gas usage prediction device according to (2), wherein, in relation to the insertion temperature in the temperature rise calculation unit, the slab information is referred to,

when a furnace insertion time is in past, an actual value is used as the insertion temperature, and
when the furnace insertion time is in future, an attribute of the slab is referred to,

when the slab is a hot slab, an insertion temperature in consideration of a temperature retention time and a conveyance time is calculated in accordance with whether or not the temperature retention device is used, and

when the slab is a cold slab, the insertion temperature is set to a predetermined value.

(4) The furnace combustion gas usage prediction device according to (2), wherein, in relation to the insertion temperature in the temperature rise calculation unit, the slab information is referred to,

when the furnace insertion time is in future, an attribute of the slab is referred to,

when the slab is a hot slab and the temperature retention device is not used, an insertion temperature is calculated in consideration of a conveyance time from continuous casting to the furnace, and

when the temperature retention device is used, an insertion temperature is calculated in consideration of a conveyance time from continuous casting to insertion of the temperature retention device, a temperature retention time in the temperature retention device, and a conveyance time from extraction of the temperature retention device to insertion into the furnace.

(5) The furnace combustion gas usage prediction device according to any one of (1) to (4), wherein, when expanding the energy-converted temperature rise of each slab, which has been calculated, into an energy-converted temperature rise for each calculation pitch, the temperature rise editing unit is configured to consider a predetermined time allocation pattern, and consider deviations of the insertion time and the extraction time from the calculation pitch.

(6) The furnace combustion gas usage prediction device according to any one of (1) to (5), wherein the gas usage prediction unit is configured to predict a gas usage that has been adjusted for actual values by using a trained model trained so as to output a gas usage in consideration of energy necessary for retaining temperature in the furnace using, as input, an energy-converted temperature rise of the entire furnace for each calculation pitch edited by the temperature rise editing unit.

(7) An energy operation optimization system including:

the furnace combustion gas usage prediction device according to any one of claims (1) to (6); and an energy operation optimization device in the steelworks,

wherein the energy operation optimization device is configured to

acquire a gas usage of a furnace, which has been predicted by the furnace combustion gas usage prediction device, and

optimize an energy operation condition of the steelworks.

(8) An energy operation optimization device of a steelworks, including:

a slab information acquisition unit configured to acquire information on a slab to be inserted into and extracted from a furnace within a predetermined future period from current time;

a temperature rise calculation unit configured to calculate an energy-converted temperature rise which has been subjected to energy conversion necessary for heating in the furnace for each slab based on slab information that has been acquired;

a temperature rise editing unit configured to

expand the energy-converted temperature rise of each slab, which has been calculated, into an energy-converted temperature rise for each calculation pitch that has been preliminarily determined based on time of insertion of each slab into the furnace and time of extraction of each slab from the furnace, and edit the energy-converted temperature rise as an energy-converted temperature rise of an entire furnace for each calculation pitch;

a gas usage prediction unit configured to predict a gas usage in the furnace based on the energy-converted temperature rise of the entire furnace for each calculation pitch and a past actual gas usage; and an energy operation optimization unit configured to optimize an energy operation condition of the steelworks based on the gas usage that has been predicted.

(9) A display terminal device for acquiring various pieces of information from a furnace combustion gas usage prediction device configured to predict a future gas usage of a furnace and an energy operation optimization device configured to optimize an energy operation condition of a steelworks based on the future gas usage, the display terminal device displaying the various pieces of information and including:

an information acquisition unit configured to acquire information including at least a gas usage predicted based on an energy-converted temperature rise of an entire furnace and a past actual gas usage and a mixing amount of by-product gas based on the gas usage that has been predicted, the energy-converted temperature rise of the entire furnace being calculated for each calculation pitch that has been preliminarily determined and edited as the energy-converted temperature rise of the entire furnace for each calculation pitch; and

a display unit configured to display information acquired by the information acquisition unit.

(10) A furnace combustion gas usage prediction method executed by a furnace combustion gas usage prediction device constructed by a computer for an energy operation optimization system of a steelworks, the method including:

a slab information acquisition step of acquiring, by a slab information acquisition unit of the computer, information on a slab to be inserted into and extracted from a furnace within a predetermined future period from current time;

a temperature rise calculation step of calculating, by a temperature rise calculation unit of the computer, an energy-converted temperature rise which has been subjected to energy conversion necessary for heating in the furnace for each slab based on slab information that has been acquired;

a temperature rise editing step of expanding, by a temperature rise editing unit of the computer, the energy-converted temperature rise of each slab, which has been calculated, into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch; and

a gas usage prediction step of predicting, by a gas usage prediction unit of the computer, a gas usage in the furnace based on the energy-converted temperature rise of the entire furnace for each calculation pitch and a past actual gas usage.

(11) An energy operation optimization method to be executed by an energy operation optimization device of a steelworks, the energy operation optimization device being constructed by a computer, the method including:

a slab information acquisition step of acquiring, by a slab information acquisition unit of the computer, information on a slab to be inserted into and extracted from a furnace within a predetermined future period from current time;

a temperature rise calculation step of calculating, by a temperature rise calculation unit of the computer, an energy-converted temperature rise which has been subjected to energy conversion necessary for heating in the furnace for each slab based on slab information that has been acquired;

a temperature rise editing step of expanding, by a temperature rise editing unit of the computer, the energy-converted temperature rise of each slab, which has been calculated, into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch;

a gas usage prediction step of predicting, by a gas usage prediction unit of the computer, a gas usage in the furnace based on the energy-converted temperature rise of the entire furnace for each calculation pitch and a past actual gas usage; and

an energy operation optimization step of optimizing, by an energy operation optimization unit of the computer, an energy operation condition of the steelworks based on the gas usage that has been predicted.

Reference Signs List

1 FURNACE COMBUSTION GAS USAGE PREDICTION DEVICE
2, 2A ENERGY OPERATION OPTIMIZATION DEVICE
3 DISPLAY TERMINAL DEVICE
4 OPERATION PLAN DEVICE
5 ACTUAL OPERATION DEVICE
6 AGGREGATION DEVICE
10 INPUT UNIT
20 STORAGE UNIT
21 OPERATION DB

30 DISPLAY UNIT
40 ARITHMETIC UNIT
41 PREPROCESSING UNIT
411 SLAB INFORMATION ACQUISITION UNIT
412 TEMPERATURE RISE CALCULATION UNIT
413 TEMPERATURE RISE EDITING UNIT
42 MODEL GENERATION UNIT
43 GAS USAGE PREDICTION UNIT
44 ENERGY OPERATION OPTIMIZATION UNIT
N NETWORK

**Claims**

1. A furnace combustion gas usage prediction device for an energy operation optimization system of a steelworks, comprising:

   a slab information acquisition unit configured to acquire information on a slab to be inserted into and extracted from a furnace within a predetermined future period from current time;
   a temperature rise calculation unit configured to calculate an energy-converted temperature rise which has been subjected to energy conversion necessary for heating in the furnace for each slab based on slab information that has been acquired;
   a temperature rise editing unit configured to

      expand the acquired energy-converted temperature rise of each slab into an energy-converted temperature rise for each calculation pitch that has been preliminarily determined based on time of insertion of each slab into the furnace and time of extraction of each slab from the furnace, and
      edit the energy-converted temperature rise as an energy-converted temperature rise of an entire furnace for each calculation pitch; and

   a gas usage prediction unit configured to predict a gas usage in the furnace based on the energy-converted temperature rise of the entire furnace for each calculation pitch and a past actual gas usage.

2. The furnace combustion gas usage prediction device according to claim 1, wherein the temperature rise calculation unit is configured to

   correct an insertion temperature in consideration of an attribute of the slab and usage of a temperature retention device during conveyance until insertion into the furnace, and an extraction temperature based on a target temperature up to which the slab is to be heated, based on insertion temperatures and extraction temperatures of a predetermined number of slabs before and after the slab with reference to the slab information, and
   calculate an energy-converted temperature rise of each slab based on the corrected insertion temperature and the extraction temperature.

3. The furnace combustion gas usage prediction device according to claim 2, wherein, in relation to the insertion temperature in the temperature rise calculation unit, the slab information is referred to,

   when a furnace insertion time is in past, an actual value is used as the insertion temperature, and
   when the furnace insertion time is in future, an attribute of the slab is referred to,

      when the slab is a hot slab, an insertion temperature in consideration of a temperature retention time and a conveyance time is calculated in accordance with whether or not the temperature retention device is used, and
      when the slab is a cold slab, the insertion temperature is set to a predetermined value.

4. The furnace combustion gas usage prediction device according to claim 1, wherein, when expanding the acquired energy-converted temperature rise of each slab into an energy-converted temperature rise for each calculation pitch, the temperature rise editing unit is configured to consider a predetermined time allocation pattern, and consider deviations of the insertion time and the extraction time from the calculation pitch.

5. The furnace combustion gas usage prediction device according to claim 1, wherein the gas usage prediction unit is configured to predict a gas usage that has been adjusted for actual values by using a trained model trained so as to output a gas usage in consideration of energy necessary for retaining temperature in the furnace using, as input, an energy-converted temperature rise of the entire furnace for each calculation pitch edited by the temperature rise editing unit.

6. An energy operation optimization system comprising:

the furnace combustion gas usage prediction device according to any one of claims 1 to 5; and
an energy operation optimization device in the steelworks,
wherein the energy operation optimization device is configured to

acquire a gas usage of a furnace, which has been predicted by the furnace combustion gas usage prediction device, and
optimize an energy operation condition of the steelworks.

7. An energy operation optimization device of a steelworks, comprising:

a slab information acquisition unit configured to acquire information on a slab to be inserted into and extracted from a furnace within a predetermined future period from current time;
a temperature rise calculation unit configured to calculate an energy-converted temperature rise which has been subjected to energy conversion necessary for heating in the furnace for each slab based on slab information that has been acquired;
a temperature rise editing unit configured to

expand the acquired energy-converted temperature rise of each slab into an energy-converted temperature rise for each calculation pitch that has been preliminarily determined based on time of insertion of each slab into the furnace and time of extraction of each slab from the furnace, and
edit the energy-converted temperature rise as an energy-converted temperature rise of an entire furnace for each calculation pitch;

a gas usage prediction unit configured to predict a gas usage in the furnace based on the energy-converted temperature rise of the entire furnace for each calculation pitch and a past actual gas usage; and
an energy operation optimization unit configured to optimize an energy operation condition of the steelworks based on the gas usage that has been predicted.

8. A display terminal device for acquiring various pieces of information from a furnace combustion gas usage prediction device configured to predict a future gas usage of a furnace and an energy operation optimization device configured to optimize an energy operation condition of a steelworks based on the future gas usage, the display terminal device displaying the various pieces of information and comprising:

an information acquisition unit configured to acquire information including at least a gas usage predicted based on an energy-converted temperature rise of an entire furnace and a past actual gas usage and a mixing amount of by-product gas based on the gas usage that has been predicted, the energy-converted temperature rise of the entire furnace being calculated for each calculation pitch that has been preliminarily determined and edited as the energy-converted temperature rise of the entire furnace for each calculation pitch; and
a display unit configured to display information acquired by the information acquisition unit.

9. A furnace combustion gas usage prediction method executed by a furnace combustion gas usage prediction device constructed by a computer for an energy operation optimization system of a steelworks, the method comprising:

a slab information acquisition step of acquiring, by a slab information acquisition unit of the computer, information on a slab to be inserted into and extracted from a furnace within a predetermined future period from current time;
a temperature rise calculation step of calculating, by a temperature rise calculation unit of the computer, an energy-converted temperature rise which has been subjected to energy conversion necessary for heating in the furnace for each slab based on slab information that has been acquired;
a temperature rise editing step of expanding, by a temperature rise editing unit of the computer, the acquired energy-converted temperature rise of each slab into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch; and

a gas usage prediction step of predicting, by a gas usage prediction unit of the computer, a gas usage in the furnace based on the energy-converted temperature rise of the entire furnace for each calculation pitch and a past actual gas usage.

**10.** An energy operation optimization method to be executed by an energy operation optimization device of a steelworks, the energy operation optimization device being constructed by a computer, the method comprising:

a slab information acquisition step of acquiring, by a slab information acquisition unit of the computer, information on a slab to be inserted into and extracted from a furnace within a predetermined future period from current time;

a temperature rise calculation step of calculating, by a temperature rise calculation unit of the computer, an energy-converted temperature rise which has been subjected to energy conversion necessary for heating in the furnace for each slab based on slab information that has been acquired;

a temperature rise editing step of expanding, by a temperature rise editing unit of the computer, the acquired energy-converted temperature rise of each slab into an energy-converted temperature rise for each calculation pitch that has been preliminarily determined based on time of insertion of each slab into the furnace and time of extraction of each slab from the furnace, and editing, by the temperature rise editing unit of the computer, the energy-converted temperature rise as an energy-converted temperature rise of an entire furnace for each calculation pitch;

a gas usage prediction step of predicting, by a gas usage prediction unit of the computer, a gas usage in the furnace based on the energy-converted temperature rise of the entire furnace for each calculation pitch and a past actual gas usage; and

an energy operation optimization step of optimizing, by an energy operation optimization unit of the computer, an energy operation condition of the steelworks based on the gas usage that has been predicted.

# FIG.1

```
        ⌇1
┌──────────────┐
│   FURNACE    │
│ COMBUSTION   │                          ⌇3
│  GAS USAGE   │              ┌──────────────────┐
│  PREDICTION  │              │     DISPLAY      │
│    DEVICE    │────┐   ⌇N    │    TERMINAL      │
└──────────────┘    ├──⊗──────│     DEVICE       │
                    │         └──────────────────┘
        ⌇2          │
┌──────────────┐    │
│    ENERGY    │    │
│  OPERATION   │────┘
│ OPTIMIZATION │
│    DEVICE    │
└──────────────┘
```

# FIG.2

# FIG.3

# FIG.4

```
              ┌─────────────┐
              │    START    │
              └──────┬──────┘
                     │              ⌒S1
       ┌─────────────▼─────────────┐
       │  ACQUIRE SLAB INFORMATION │
       └─────────────┬─────────────┘
                     │              ⌒S2
       ┌─────────────▼─────────────┐
       │        CALCULATE          │
       │     ENERGY-CONVERTED      │
       │     TEMPERATURE RISE      │
       └─────────────┬─────────────┘
                     │              ⌒S3
       ┌─────────────▼─────────────┐
       │   EDIT ENERGY-CONVERTED   │
       │     TEMPERATURE RISE      │
       └─────────────┬─────────────┘
                     │              ⌒S4
       ┌─────────────▼─────────────┐
       │     PREDICT GAS USAGE     │
       └─────────────┬─────────────┘
                     │
              ┌──────▼──────┐
              │     END     │
              └─────────────┘
```

# FIG.5

```
          ┌──────────────┐
          │    START     │
          └──────────────┘
                 │
                 ▼                          ⌒S21
    ┌────────────────────────────────────┐
    │   SELECT SLAB IN TARGET TIME ZONE  │
    └────────────────────────────────────┘
                 │
                 ▼                  ⌒S22
            ◇─────────────◇
          IS TIME OF            NO
     INSERTION INTO FURNACE ─────────────────────┐
          IN PAST?                                │
            ◇─────────────◇                       │
                 │ YES        ⌒S23                │      ⌒S26
    ┌────────────────────────────────┐   ┌────────────────────────────────┐
    │   REFER TO ACTUAL VALUE OF     │   │   INSERTION TEMPERATURE        │
    │   INSERTION TEMPERATURE        │   │   SIMULATION                   │
    └────────────────────────────────┘   └────────────────────────────────┘
                 │                                │
                 ◄────────────────────────────────┘
                 ▼                  ⌒S24
    ┌────────────────────────────────────┐
    │  CORRECT INSERTION TEMPERATURE     │
    │  AND EXTRACTION TEMPERATURE        │
    └────────────────────────────────────┘
                 │
                 ▼                  ⌒S25
    ┌────────────────────────────────────┐
    │  CALCULATE ENERGY-CONVERTED        │
    │  TEMPERATURE RISE                  │
    └────────────────────────────────────┘
                 │
                 ▼
          ┌──────────────┐
          │     END      │
          └──────────────┘
```

# FIG.6

```
                    START
                      │
                      ▼
              ┌───────────────┐  ⌐S261
              │   HOT SLAB?   │─────── NO ──────────┐
              └───────────────┘                     │
                      │                             ▼
                     YES                  ┌──────────────────────┐ ⌐S267
                      │                   │ SET TEMPERATURE OF    │
                      │                   │ INSERTION INTO        │
                      ▼                   │ FURNACE TO            │
              ┌───────────────┐ ⌐S262     │ PREDETERMINED VALUE   │
              │   IS HEAT     │           └──────────────────────┘
              │ RETENTION PIT │─── NO ──────┐              │
              │  TO BE USED?  │             │              │
              └───────────────┘             │              │
                     YES                    │              │
```

**S263** — CALCULATE TEMPERATURE OF INSERTION INTO HEAT RETENTION PIT IN CONSIDERATION OF SLAB TEMPERATURE IN CONTINUOUS CASTING AND CONVEYANCE TIME (CONTINUOUS CASTING TO HEAT RETENTION PIT)

**S266** — CALCULATE TEMPERATURE OF INSERTION INTO FURNACE IN CONSIDERATION OF SLAB TEMPERATURE IN CONTINUOUS CASTING AND CONVEYANCE TIME (CONTINUOUS CASTING TO FURNACE)

**S264** — CALCULATE TEMPERATURE OF EXTRACTION FROM HEAT RETENTION PIT IN CONSIDERATION OF INSERTED SLAB TEMPERATURE IN HEAT RETENTION PIT AND STAYING TIME (HEAT RETENTION PIT)

**S265** — CALCULATE TEMPERATURE OF INSERTION INTO FURNACE IN CONSIDERATION OF TEMPERATURE OF EXTRACTION FROM HEAT RETENTION PIT AND CONVEYANCE TIME (HEAT RETENTION PIT TO FURNACE)

```
                    END
```

# FIG.7

| | FUTURE ONE HOUR | | FUTURE TWO HOUR | |
|---|---|---|---|---|
| **PLAN OF INSERTION OF SLAB INTO FURNACE** | | 1400001 | | |
| | 1400002 | | | |
| | 1400006 | | 1400009 | |
| | 1400008 | | | |
| | | | | |
| **IN-FURNACE ENERGY CONVERSION AGGREGATION FOR EACH ΔT** | $\Sigma(A)$  $\Sigma(A)$  $\Sigma(A)$  $\Sigma(A)$  $\Sigma(A)$  $\Sigma(A)$  $\Sigma(A)$  $\Sigma(A)$  $\Sigma(A)$  $\Sigma(A)$  $\Sigma(A)$  $\Sigma(A)$ | | | |

# FIG.8

## INTERNATIONAL SEARCH REPORT

International application No.

**PCT/JP2023/021529**

### A. CLASSIFICATION OF SUBJECT MATTER

*F23N 5/00*(2006.01)i; *G06Q 10/04*(2023.01)i
FI:  F23N5/00 D; G06Q10/04; F23N5/00 G

According to International Patent Classification (IPC) or to both national classification and IPC

### B. FIELDS SEARCHED

Minimum documentation searched (classification system followed by classification symbols)

F23N5/00-5/26; G06Q10/04; C21D1/00-11/00; B21B1/00-99/00;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 104073621 A (BAOSHAN IRON & STEEL) 01 October 2014 (2014-10-01) | 1, 6-7, 9-10 |
|  | in particular, paragraphs [0021]-[0069] | |
| Y |  | 8 |
| A |  | 2-5 |
| Y | CN 113656945 A (SHOUGANG JINGTANG UNITED IRON & STEEL CO., LTD.) 16 November 2021 (2021-11-16) | 8 |
|  | in particular, paragraphs [0069]-[0070] | |
| Y | JP 2012-188752 A (JFE STEEL CORP.) 04 October 2012 (2012-10-04) | 8 |
|  | in particular, paragraphs [0017]-[0019], [0030]-[0032], fig. 2-5, 7-10 | |
| Y | JP 2012-140662 A (SUMITOMO METAL INDUSTRIES, LTD.) 26 July 2012 (2012-07-26) | 8 |
|  | in particular, paragraph [0089] | |
| A | JP 2011-162804 A (SUMITOMO METAL INDUSTRIES, LTD.) 25 August 2011 (2011-08-25) | 1-10 |
|  | paragraphs [0007]-[0064] | |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2023/021529**

**C.    DOCUMENTS CONSIDERED TO BE RELEVANT**

| Category* | Citation of document, with indication, where appropriate, of the relevant passages | Relevant to claim No. |
|---|---|---|
| A | JP 7-5979 B2 (NKK CORP.) 25 January 1995 (1995-01-25) column 3, line 10 to column 4, line 41 | 1-10 |

Form PCT/ISA/210 (second sheet) (January 2015)

**INTERNATIONAL SEARCH REPORT**
Information on patent family members

International application No.

**PCT/JP2023/021529**

| Patent document cited in search report | | | Publication date (day/month/year) | Patent family member(s) | Publication date (day/month/year) |
|---|---|---|---|---|---|
| CN | 104073621 | A | 01 October 2014 | (Family: none) | |
| CN | 113656945 | A | 16 November 2021 | (Family: none) | |
| JP | 2012-188752 | A | 04 October 2012 | (Family: none) | |
| JP | 2012-140662 | A | 26 July 2012 | (Family: none) | |
| JP | 2011-162804 | A | 25 August 2011 | (Family: none) | |
| JP | 7-5979 | B2 | 25 January 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015174359 A
- JP 2021163085 A

- JP 2020062922 A